# EUROPEAN PATENT SPECIFICATION

(11) **EP 2 378 591 B1**
(45) Date of publication and mention of the grant of the patent: **27.02.2019**
(21) Application number: 11250427.9
(22) Date of filing: 05.04.2011
(51) Int. Cl.: H01M 2/10, H01M 2/34

(54) **Secondary battery**
Sekundärbatterie
Batterie secondaire

(30) Priority: 13.04.2010 US 323752 P
(43) Date of publication of application: 19.10.2011
(73) Proprietor: Samsung SDI Co., Ltd., Yongin-si, Gyeonggi-do (KR)
(72) Inventor: Baek, Woon-Seong, Yongin-si Gyeonggi-do (KR); Park, Sang-Jin, Yongin-si Gyeonggi-do (KR); Woody, Kim, Yongin-si Gyeonggi-do (KR)
(74) Representative: Mounteney, Simon James

(56) References cited:
- EP-A1- 1 403 942
- EP-A1- 1 995 804
- EP-A1- 2 178 134
- WO-A1-2005/055343
- US-A1- 2003 170 530
- US-A1- 2006 214 632

## Description

### BACKGROUND

### 1. Field of the Invention

The present invention relates to a secondary battery having an improved connection between a bare cell and a PCM.

### 2. Discussion of Related Art

A secondary battery can accumulate high energy. Therefore, when a problem, such as internal short, occurs during or after charging of the secondary battery, the energy accumulated therein can be discharged in a short time. This may cause the secondary battery to burn or explode which is naturally undesirable and potentially dangerous. Consequently, a secondary battery is typically provided with a variety of safety components to prevent fire or explosion. The safety components are commonly electrically connected with the bare cell by welding connection terminals, such as a lead plate, to the bare cell. These safety components cut electric current by terminating the electric connection with the bare cell when the battery is overcharged or excessive heat is generated in the battery. Examples of safety components include a secondary protecting element, such as a protecting circuit, a PCT (Positive Temperature Coefficient; hereafter "PCT") element, and a bimetal element.

Some secondary batteries are manufactured with a specific case, after being equipped with safety components. Other secondary batteries are manufactured by combining safety components with the bare cell, without using a specific case. This latter approach reduces the size and weight of the secondary battery, thereby enabling portable electronic devices equipped with the secondary battery to have reduced size and weight.

However, secondary batteries manufactured without using a specific case suffer from a problem in that their mechanical strength or heat resistance is reduced at the connecting portion between the bare cell and the safety components. Therefore, the connecting portion may be damaged when external shock is applied, such that the electric connection between the safety components and the bare cell is affected, thereby causing a safety problem in the battery.

Further, in pouch type batteries, it is necessary to use an insulating tape for the sealing portion of the pouch and the mechanical strength of the sealing portion is low. Therefore, there is a structural problem in that it is difficult to perform tab-bending. Further, the mechanical strength of the external material is low, such that the connecting portion with the PCM etc. is correspondingly weakened, and accordingly, a safety problem may occur in the battery.

US2006/0214632 discloses a pouch battery with folded tabs for contacting a PCM.

The present invention sets out to overcome the above-mentioned problems of the prior art.

Accordingly, the invention provides a secondary battery as set out in Claim 1. Preferred features of the invention are set out in Claims 2 to 8.

According to the invention, it is therefore possible to manufacture a secondary battery having the desired mechanical strength, even without adding a specific case, by extending the PCM enclosure to at least one side surface of the bare cell. Therefore, it is possible to reduce the battery's vulnerability to external shock while having the advantages that a common inner-pack type secondary battery has.

Further, it is possible to easily change the external appearance of the secondary battery, because it is easy to change the shape of the PCM enclosure. Therefore, it is easy to cope with changes in external appearance of the secondary battery, in accordance with changes in design of electronic devices to be equipped with the secondary battery.

A pouch type secondary battery according to the present invention can be molded without using an insulating tape for the sealing portion, such that it is possible to improve productivity by reducing the number of parts of the secondary battery, such as the insulating tape, while keeping uniform the position of the tabs.

If the PCM enclosure is formed on the sealing portion of a pouch, this increases mechanical strength of the sealing portion. Further, the PCM enclosure includes a wall such that the tabs can be uniformly bent and smoothly electrically connected with the PCM.

### BRIEF DESCRIPTION OF THE DRAWINGS

The accompanying drawings, together with the description illustrate embodiments of the present invention and, serve to explain the principles of the present invention.
FIG. 1 is a perspective view showing the upper portion of a pouch type bare cell;
FIG. 2A is a perspective view showing a pouch type secondary battery according to the related art;
FIG. 2B is a view showing tab-bending according to the related art;
FIG. 3A is a perspective view showing a pouch type secondary battery according to the present invention;
FIG. 3B is a view showing tab-bending of the second battery according to the present invention;
FIG. 4A is a view showing a side of a PCM enclosure, a PCM, and a case covering the PCM, in the second battery according to the present invention;
FIG. 4B is a view showing the inside of a PCM case according to the present invention;
FIG. 5A is a view showing an external material and a pouch type secondary battery according to the present invention;
FIG. 5B is a perspective view showing a pouch type secondary battery further including an external material according to the present invention;
FIG. 6 is a view showing a can type bare cell according to the related art; and
FIG. 7 is a view showing a can type secondary battery according to the related art.

### DETAILED DESCRIPTION

Embodiments of the present invention and other information for those skilled in the art to easily understand the present invention are described hereafter in detail with the accompanying drawings. However, the present invention may be changed and modified in various ways within the scope described in claims; therefore, it can be understood by those skilled in the art that the embodiment described below are just exemplified.

When it is determined that detailed descriptions for well-known technologies may unnecessarily make the point of the present invention unclear, the detailed descriptions are not provided, in explaining the present invention. Further, even if the same components are shown in different figures of the drawings, it should be noted that they are represented by the same reference numerals or characters wherever possible. In addition, the size or thickness may be exaggerated or reduced in the drawings for the convenience of description and clarity, and may be different from the thickness or size of the actual layers.

The present invention is described hereafter in detail with reference to the drawings.

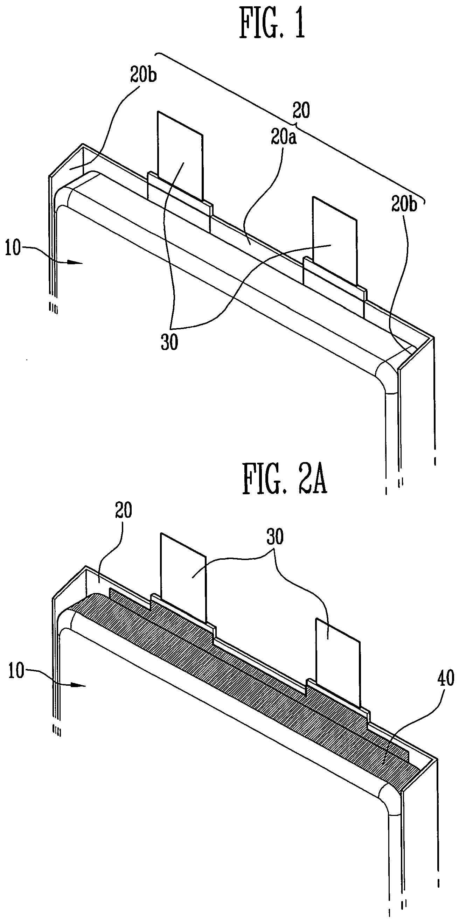

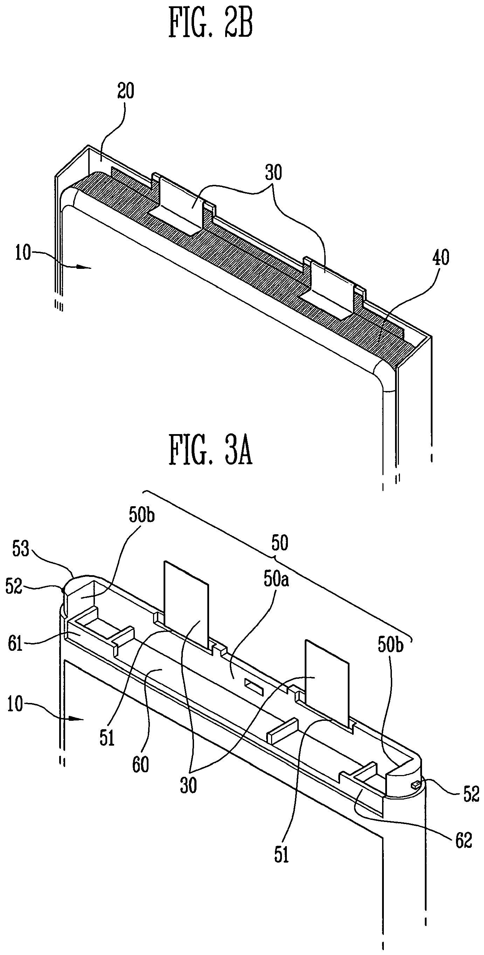

FIG. 1 is a view showing a typical bare cell for pouch type secondary batteries, and FIGS. 2A and 2B are views showing when an insulating tape is attached to the sealing portion of a bare cell and the tab is bent according to the related art.

Referring to FIG. 1, a bare cell 10 is formed by inserting an electrode assembly, which is composed of a negative plate, a positive plate, and separator and has a tab electrically connected with the plates, in a pouch. The bare cell 10 shown in FIG. 1 is included in a pouch type secondary battery. The pouch type secondary battery includes a sealing portion sealed in the pouch and a portion of the tabs 30 is exposed to the outside through the sealing portion 20. The sealing portion 20 is formed by applying heat and pressure to the edge of the pouch, using a heat-sealable material.

FIGS. 2A and 2B are views illustrating bending the tabs 30 according to the related art. Bending the tabs 30 makes it easy to combine PCM with the bare cell 10 and electrically connect them. However, bending the tabs 30 may cause a danger, such as short, due to contact between the tab 30 and the pouch. In order to prevent this problem, in the related art, it was required to attach an insulating tape 40 to the contact portion between the pouch and the tabs 30, before bending the tabs 30. The insulating tape 40 is high in unit cost, but is wasted in the process and only can prevent the danger, such as short. Further, when the tabs 30 are bent, the sealing portion 20 does not have sufficient strength, such that it cannot support the tabs 30 in bending, and accordingly, it was difficult to uniformly bend the tabs 30.

A pouch type secondary battery according to the present invention includes a bare cell composed of a PCM, a case covering the PCM, an electrode assembly, and a pouch housing the electrode assembly. The pouch has a sealing portion with tabs, the sealing portion includes a PCM enclosure, and the PCM enclosure and a PCM seat are formed on at least one side of the bare cell.

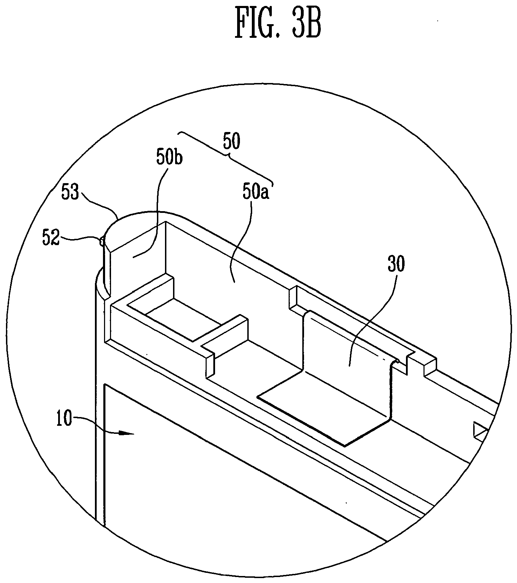

FIGS. 3A and 3B show a second battery according to the present invention, in which a PCM enclosure is formed at the sealing portion of a pouch and the PCM enclosure is stepped.

Referring to FIGS. 3A and 3B, the PCM enclosure 50 is formed at the sealing portion of the pouch and positioned between the pouch and the PCM. The PCM enclosure 50 is formed to be in contact with only one cross section 50a of the PCM in the sealing portion, but may alternatively be formed to be in contact with not only one cross section of 50a of the PCM, but both sides 50b. The PCM enclosure 50 is formed throughout the extent of the sealing portion that contacts the cross section of the PCM but in alternative embodiments it is formed over only a portion of this. The larger the area of the PCM enclosure 50 in the sealing portion, the more the PCM is firmly combined with the bare cell 10.

The PCM enclosure 50 formed on the long side cross section of the sealing portion can prevent a short which may be caused in bending the tabs 30, thereby functioning similarly to the insulating tape in the related art. Further, the PCM enclosure 50 increases mechanical strength of the sealing portion 20.

The PCM enclosure 50 extends over both sides and the bottom of the bare cell 10. The PCM enclosure extending two sides of the bare cell 10 may be modified in a flat plane shape, a polygonal shape, and a rounded shape, depending on the design of the secondary battery. FIG. 3 shows a rounded shape 53. Further, the PCM enclosure, when formed to cover these two sides of the bare cell 10, as described above, functions as an external material of the second battery. Further, it is possible to manufacture a second battery having desired mechanical strength, even without adding a specific case.

Although the PCM enclosure has formations that extend over the entire minor side surfaces of the bare cell in this embodiment, the invention also includes configurations in which the PCM enclosure has a formation that extends over only a single side surface of the bare cell. This could be a minor side surface or a major side surface. The formation need not extend over the entire surface, but instead just a part of it, in order to provide at least some of the benefits of the invention. Alternatively, the PCM enclosure may include one or more formations that extend over one or more of the side surfaces in their entirety. The invention also provides embodiments in which the formation or formations cover different side surfaces to different extents.

The PCM enclosure 50 has a PCM seat 60. The PCM seat 60 is where the PCM is seated. In alternative embodiments, it may be formed on any side of the bare cell 10. Preferably, the seat 60 is formed adjacent to the tabs as in this embodiment.

Further, as shown in FIGS. 3A and 3B, the seat 60 includes first and second PCM-seating structures 61 and 62. Alternative embodiments include a single PCM-seating structure. It is preferable that the first and second seating structures 61 and 62 are differently formed. This prevents accidental reverse insertion of the PCM in the PCM enclosure. Therefore, the process of combining the PCM with the bare cell 10 is simplified, such that it is possible to prevent failure in the entire process.

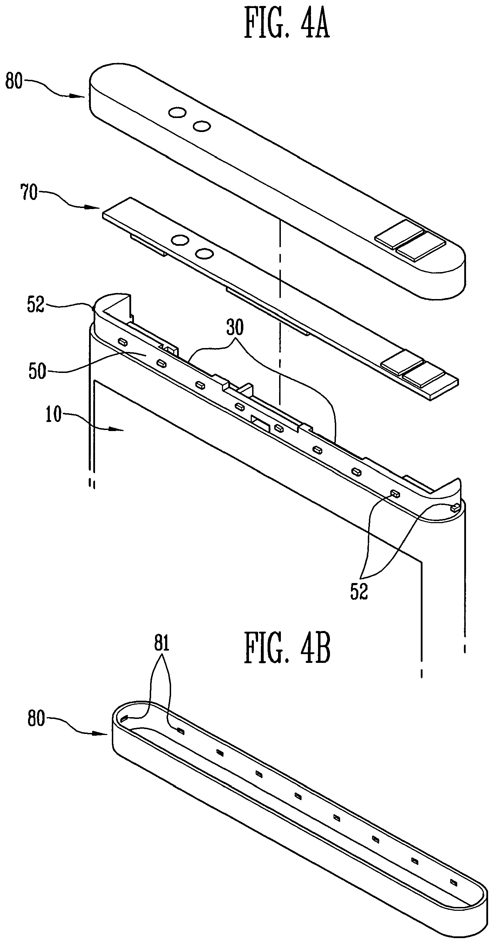

FIG. 4A shows when the PCM and the case covering the PCM are connected to the portion where the PCM enclosure is formed and FIG. 4B shows the inside of the case.

Referring to FIG. 4A, a plurality of protrusions are formed at the lower end on the outer surface of the PCM enclosure 50 and a plurality of locking formations 81 are formed at positions corresponding to the protrusions 52 in the case 80 covering the PCM. The protrusions and formations could have their respective locations reversed and they can also differ in number.

First, the tabs 30 are bent and then the PCM 70 is seated in the PCM seat. Thereafter, the PCM enclosure 50 and the PCM 70 of the bare cell 10 are covered by the case 80. In this configuration, the case 80 is in contact with the outer surface of the PCM enclosure 50 and combined by the protrusions 52 and the locking formations 81 formed at the contact portion (FIG. 4B).

In FIG. 4, the protrusions 52 are formed at the lower end on the outer surface of the PCM enclosure 50 and the locking formations 81 are formed at the positions corresponding to the protrusions in the case 80, but the protrusions and grooves are formed for connection. Therefore, the protrusions and locking formations have only to be formed at the positions corresponding to each other, such that the position and the number can be modified in various ways in accordance with the preferred design. Further, it is possible to additionally use an adhesive to achieve a more firm combination. Alternatively, it is possible to achieve the combination only with a bonding member, such as an adhesive, when the protrusions or the locking formations are not formed.

Referring to FIGS. 2A and 2B, in the pouch type secondary battery according to the related art, there was a problem that since the mechanical strength of the sealing portion 20 and the tabs 30 was low, it was difficult to bend the tabs 30 and the bending was not uniform.

In FIG. 3, the sealing portion of the secondary battery according to the present invention has improved mechanical strength by virtue of the PCM enclosure 50. Further, the PCM enclosure can be formed only inside the long side of the sealing portion. Further, the PCM enclosure further has a projecting wall extending along the outer surface of the long side of the sealing portion. The projecting wall has recesses 51 where the tabs 30 of the sealing portion are formed. Preferably, the lower portion is positioned inside. It is possible to keep the bending of the tabs 30 uniform, using the mechanical strength of the sealing portion, which is increased by the wall 50 and the recesses 51 formed where the tabs 30 are formed (see FIG. 3B).

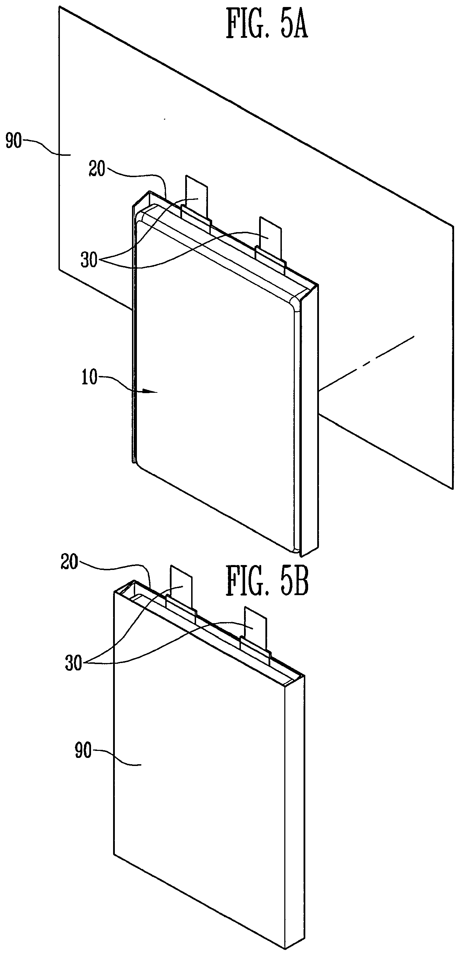

FIG. 5 is a view showing a pouch type secondary battery according to another embodiment of the present invention, in which the pouch type secondary battery further includes an external material with the top and bottom open.

FIG. 5A shows the external material and a bare cell before a PCM enclosure is formed on a sealing portion and FIG. 5B shows the bare cell including the external material.

In this pouch type secondary battery, the bare cell 10 is covered with the external material 90, before the PCM enclosure is formed on the sealing portion 20, as described above. The external material 90 covering the bare cell 10 has upper and lower openings. The other sides of the bare cell 10, except for the upper and lower openings, are partially or entirely closed by the external material 90. Preferably, as shown in the figure, the entire bare cell 10 is closed except for the top and bottom of bare cell. Either one of the upper and lower openings may include the sealing portion with the tabs 30 in embodiments of the invention. In FIG. 5, the portion where the upper tab of the bare cells is formed is open.

The external material may be a sheet or tube. When a sheet is employed, as shown in the figure, the bare cell 10 is covered by the external material 90 with only the upper and lower portions exposed, and edges of the external material 90 are attached by a bonding material, such as an adhesive (see FIG. 4). Alternatively, when the external material is in the form of a tube with two openings, the bare cell 10 is inserted through the openings.

In such bare cells further including the external material 90, the external material 90 functions as a support, such that the mechanical strength of the sealing portion is improved. Therefore, it is possible to more easily form the PCM enclosure in the sealing portion and more firmly combine the bare cell 10 with the PCM.

Further, the external material 90 can increase the mechanical strength of the secondary battery. It is possible to produce an electrically safe secondary battery, using a nonconductor. The pouch type secondary battery further including the external material 90 according to the present invention has mechanical strength and electrical safety required for a secondary battery, even without following processes.

A can type secondary battery is described hereafter.

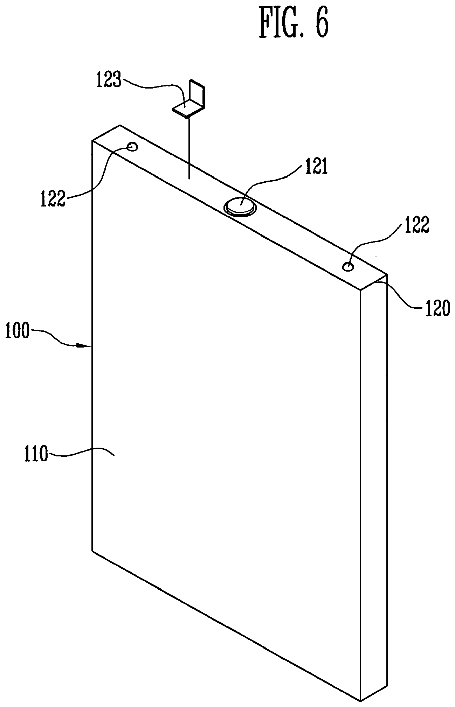

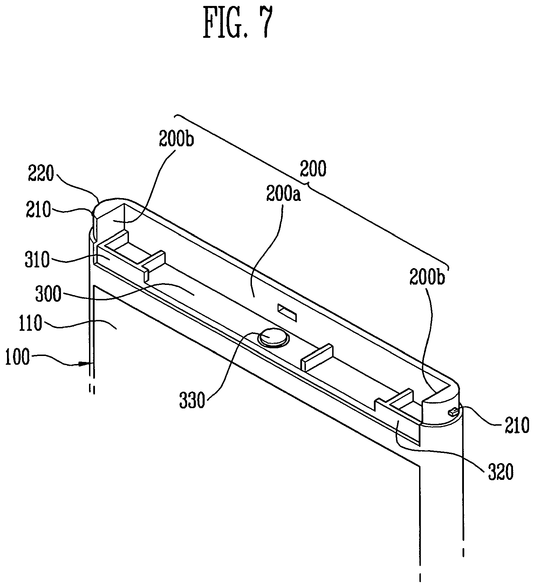

FIG. 6 shows a can type bare cell and a lead plate and FIG. 7 shows a can type secondary battery having a PCM enclosure.

Referring to FIG. 6, an electrode assembly (not shown) composed of a negative plate, a positive plate, and a separator is accommodated in a can 110 through an opening of the can 110. The bare cell is formed by closing the opening with a cap assembly 120 and the welding it.

In a can type secondary battery according to the related art, several members were required to fix the PCM to a bare cell 100 and electrically connect it to the outside. As shown in FIG. 6, it was required to form fixing protrusions 122 to fix the position of the PCM in the cap assembly and weld a terminal member, such as the lead plate 123, for electrical connection with the bare cell 100. The material cost of the battery was increased by the fixing protrusions 122 and the lead plate 123, and the manufacturing cost of the battery was increased by the additional process, such as welding. Nevertheless, there has been a problem that the protrusions 122 and the lead plate 123 are not enough to physically and electrically stably fix the PCM etc. to the bare cell 100.

FIG. 7 is a view showing another can type secondary battery.

Referring to FIG. 7, the PCM enclosure 200 is formed at the upper end of the bare cell 100 and positioned between the bare cell and the PCM.

The PCM enclosure 200 may be formed to be in contact with only one cross section 200a of the PCM, or may be formed to be in contact with not only one cross section 200a, but both sides 200b. The larger the contact area between the PCM enclosure 200 and the PCM, the more the PCM is firmly combined with the bare cell 100. Further, the PCM enclosure 200 may be formed to be in partial or entire contact with the cross section of the PCM. Preferably, the PCM enclosure 200 is formed to be in contact with the entire cross section of the PCM. In the figure, it is in contact with one long side and both cross sections of the PCM.

Although the PCM enclosure 200 may be formed any cross section of the bare cell 100, it is preferable to be formed in the cap assembly (120 in FIG. 6) to be easily electrically connected with the PCM.

The PCM enclosure may extend over both minor sides and the bottom of the bare cell 100. The PCM enclosure extending at both minor sides of the bare cell 100 may be modified in a flat plane shape, a polygonal shape, and a rounded shape, depending on the design of the secondary battery. FIG. 7 shows a rounded shape 200. The PCM enclosure covering the sides of the bare cell, as described above, functions as an external material of the secondary battery. Therefore, it is possible to improve mechanical strength of the can type secondary battery of the related art, even without adding a specific case. Further, the can type secondary battery of the related art had a problem that it was difficult to cope with changes in external shape in accordance with design of electronic devices to be equipped with the battery. In this can type secondary battery, it is possible to easily change the external shape of the can type secondary battery by simply changing the shape of the PCM enclosure formed on the outer surface of the bare cell, such that it is possible to overcome the problem.

Further, the PCM enclosure 200 has a PCM seat 300. The PCM seat 300 is where the PCM is seated in the bare cell 100 and may be formed on any side of the bare cell 100. It is preferable to form the seat to a portion where an electrode 121 of the bare cell 100 is formed, in order to easily form an electrode 300 in the seat 300.

As shown in FIG. 7, the seat 300 includes PCM seating structures 310 and 320. The PCM-seating structure may be single or plural in alternative structures. It is preferable that the first and second seating structures 310 and 320 are differently formed. The first and second seating structures 310 and 320 can then prevent the bare cell 100 from being reversely seated.

As described above, the PCM enclosure 200 has protrusions 210 for combination with the case covering the PCM. Protrusions 210 are formed at the lower end on the outer surface of the PCM enclosure 200 and locking formations corresponding to the protrusions 210 are formed in the case covering the PCM. The bare cell 100 is combined with the PCM and then the PCM is covered with the case. In this structure, the case is in contact with the outer surface of the PCM enclosure and combined with the PCM enclosure at the contact portions by the protrusions and the locking formations. The portions with the protrusions and the locking formations have only to correspond to the protrusions and the locking formation, without being fixed. They may vary in number and have their respective positions reversed. Alternatively, it is possible to achieve the combination with a bonding member, such as an adhesive, when the protrusions or the locking formations are not formed.

## Claims

1. A secondary battery comprising:
a bare cell (10) including an electrode assembly;
a protection circuit module (PCM) connected to electrodes of the electrode assembly; and
a PCM enclosure (50) located on the bare cell (10);
wherein the bare cell (10) comprises a pouch and the PCM enclosure (50) is formed on a sealing portion (20) of the pouch;
wherein the PCM is located within the PCM enclosure (50) and the PCM enclosure (50) secures the position of the PCM relative to the bare cell (10); **characterised in that** the PCM enclosure (50) is integrally formed with at least one formation that at least partially covers a side surface of the bare cell (10);
wherein at least one electrode tab (30) is connected between a respective electrode of the electrode assembly and the said PCM, the said electrode tab (30) extending between the said electrode and the PCM via the PCM enclosure (50); wherein the PCM enclosure (50) comprises a projecting wall and the electrode tab (30) is folded over the projecting wall; and
wherein the PCM enclosure (50) is a moulded structure;
**characterized in that** the projecting wall comprises a recessed portion and the electrode tab (30) is folded over the projecting wall within the recessed portion.

2. A secondary battery according to Claim 1, wherein the PCM enclosure (50) is located on a top portion of the bare cell (10).

3. A secondary battery according to Claim 1 or 2, wherein the PCM enclosure (50) substantially covers two opposing side surfaces and a bottom surface of the bare cell (10).

4. A secondary battery according to any preceding claim, further comprising a cover (80) fitted to the PCM enclosure (50) for covering the PCM.

5. A secondary battery according to Claim 4, wherein one of the cover (80) and the PCM enclosure (50) is provided with a protrusion (52) that projects towards the other of the cover and the PCM enclosure (50) and engages with a locking formation (81) on the other of the cover and the PCM enclosure (50) for securing the cover upon the PCM enclosure (50).

6. A secondary battery according to Claim 5, wherein the locking formation (81) is a groove.

7. A secondary battery according to any preceding claim, wherein the PCM enclosure (50) comprises at least one seating structure (60) and the PCM is situated on the seating structure (60).

8. A secondary battery according to Claim 7, comprising two seating structures (61, 62), the two said seating structures (61, 62) having mutually different configurations.

## Patentansprüche

1. Sekundärbatterie, umfassend:
eine unverkleidete Zelle (10), die eine Elektrodenbaugruppe einschließt;
ein Schutzschaltungsmodul (PCM), das mit den Elektroden der Elektrodenbaugruppe verbunden ist; und
ein PCM-Gehäuse (50), das sich auf der unverkleideten Zelle (10) befindet;
worin die unverkleidete Zelle (10) einen Beutel umfasst und das PCM-Gehäuse (50) auf einem Dichtungsabschnitt (20) des Beutels ausgebildet ist;
worin sich das PCM innerhalb des PCM-Gehäuses (50) befindet und das PCM-Gehäuse (50) die Position des PCM in Bezug auf die unverkleidete Zelle (10) sichert; **dadurch gekennzeichnet, dass** das PCM-Gehäuse (50) in einem Stück mit mindestens einer Formation ausgebildet ist, die eine Seitenfläche der unverkleideten Zelle (10) zumindest teilweise bedeckt;
worin mindestens eine Elektrodenlasche (30) zwischen einer jeweiligen Elektrode der Elektrodenbaugruppe und dem PCM verbunden ist, wobei sich die Elektrodenlasche (30) über das PCM-Gehäuse (50) zwischen der Elektrode und dem PCM erstreckt; worin das PCM-Gehäuse (50) eine vorstehende Wand umfasst und die Elektrodenlasche (30) über die vorstehende Wand gefaltet ist; und
worin das PCM-Gehäuse (50) eine Formpressstruktur ist;
**dadurch gekennzeichnet, dass** die vorstehende Wand einen ausgesparten Abschnitt umfasst und die Elektrodenlasche (30) innerhalb des ausgesparten Abschnitts über die vorstehende Wand gefaltet ist.

2. Sekundärbatterie nach Anspruch 1, worin das PCM-Gehäuse (50) sich auf einem oberen Abschnitt der unverkleideten Zelle (10) befindet.

3. Sekundärbatterie nach Anspruch 1 oder 2, worin das PCM-Gehäuse (50) im Wesentlichen zwei gegenüberliegende Seitenflächen und eine Bodenfläche der unverkleideten Zelle (10) abdeckt.

4. Sekundärbatterie nach einem der vorhergehenden Ansprüche, ferner eine Abdeckung (80) umfassend, die zum Abdecken des PCM in das PCM-Gehäuse (50) eingepasst ist.

5. Sekundärbatterie nach Anspruch 4, worin eines der Abdeckung (80) und des PCM-Gehäuses (50) mit einem Vorsprung (52) versehen ist, der in Richtung des anderen von Abdeckung und PCM-Gehäuse (50) hervorsteht und in eine Verriegelungsformation (81) am anderen von Abdeckung und PCM-Gehäuse (50) eingreift, um die Abdeckung am PCM-Gehäuse (50) zu befestigen.

6. Sekundärbatterie nach Anspruch 5, worin die Verriegelungsformation (81) eine Nut ist.

7. Sekundärbatterie nach einem der vorhergehenden Ansprüche, worin das PCM-Gehäuse (50) mindestens eine Befestigungsflächenstruktur (60) umfasst und das PCM auf der Befestigungsflächenstruktur (60) gelegen ist.

8. Sekundärbatterie nach Anspruch 7, zwei Befestigungsflächenstrukturen (61, 62) umfassend, wobei die beiden Befestigungsflächenstrukturen (61, 62) voneinander verschiedene Konfigurationen aufweisen.

## Revendications

1. Batterie secondaire comprenant :
une cellule nue (10) incluant un ensemble d'électrode ;
un module de circuit de protection (PCM) raccordé à des électrodes de l'ensemble d'électrode ; et
une enceinte de PCM (50) située sur la cellule nue (10) ;
dans laquelle la cellule nue (10) comprend une poche et l'enceinte PCM (50) est formée sur une partie d'étanchéité (20) de la poche ;
dans laquelle le PCM est situé dans l'enceinte de PCM (50) et l'enceinte de PCM (50) fixe la position du PCM de manière relative à la cellule nue (10) ; **caractérisé en ce que** l'enceinte de PCM (50) est formée d'un seul tenant avec au moins une formation qui couvre au moins partiellement une surface latérale de la cellule nue (10) ;
dans laquelle au moins une patte d'électrode (30) est raccordée entre une électrode respective de l'ensemble d'électrode et ledit PCM, ladite patte d'électrode (30) s'étendant entre ladite électrode et le PCM via l'enceinte de PCM (50) ; dans laquelle l'enceinte de PCM (50) comprend un mur de projection et la patte d'électrode (30) est repliée sur le mur de projection ; et
dans laquelle l'enceinte de PCM (50) est une structure moulée ;
**caractérisée en ce que** le mur de projection comprend une partie creuse et la patte d'électrode (30) est repliée sur le mur de projection dans la partie creuse.

2. Batterie secondaire selon la revendication 1, dans laquelle l'enceinte de PCM (50) est située sur une partie supérieure de la cellule nue (10).

3. Batterie secondaire selon la revendication 1 ou 2, dans laquelle l'enceinte de PCM (50) couvre sensiblement deux surfaces latérales opposées et une surface inférieure de la cellule nue (10).

4. Batterie secondaire selon l'une quelconque des revendications précédentes, comprenant en outre un capot (80) installé sur l'enceinte de PCM (50) permettant de recouvrir le PCM.

5. Batterie secondaire selon la revendication 4, dans lequel un du capot (80) et de l'enceinte de PCM (50) est doté d'une saillie (52) qui se projette vers l'autre du capot et de l'enceinte de PCM (50) et met en prise une formation de verrouillage (81) sur l'autre du capot et de l'enceinte de PCM (50) afin de fixer le capot sur l'enceinte de PCM (50).

6. Batterie secondaire selon la revendication 5, dans laquelle la formation de verrouillage (81) est une cannelure.

7. Batterie secondaire selon l'une quelconque des revendications précédentes, dans laquelle l'enceinte de PCM (50) comprend au moins une structure d'assise (60) et le PCM est situé sur la structure d'assise (60).

8. Batterie secondaire selon la revendication 7, comprenant deux structures d'assise (61, 62), lesdites deux structures d'assise (61, 62) présentant des configurations réciproquement différentes.
